# EUROPÄISCHE PATENTSCHRIFT

(11) **EP 1 666 354 B1**
(45) Veröffentlichungstag und Bekanntmachung des Hinweises auf die Patenterteilung: **29.09.2010**
(21) Anmeldenummer: 05025886.2
(22) Anmeldetag: 28.11.2005
(51) Int. Cl.: B64C 1/12

(54) **Strukturbauteil, Verfahren zum Herstellen eines Strukturbauteils und Verwendung eines Strukturbauteils für eine Flugzeugschale**
Structural component, process for manufacturing a structural component and use of a structural component for an aircraft skin
Composant structurel, procédé de fabrication d'un composant structurel et utilisation d'un composant structurel dans le revêtement d'un aéronef

(30) Priorität: 01.12.2004 DE 102004058014; 01.12.2004 US 632091 P
(43) Veröffentlichungstag der Anmeldung: 07.06.2006
(73) Patentinhaber: Airbus Operations GmbH, 21129 Hamburg (DE)
(72) Erfinder: Vichniakov, Alexei, 39171 Sülzetal (DE)
(74) Vertreter: Maiwald Patentanwalts GmbH

(56) Entgegenhaltungen:
- WO-A-88/02671
- DE-A1- 10 163 848
- FR-A- 992 762
- FR-A- 2 440 831
- US-A- 3 567 407
- US-A- 3 622 283
- US-A- 3 950 115
- US-A- 4 113 910
- US-A- 4 331 723
- US-A- 4 966 802
- US-A- 5 735 486
- US-A- 5 842 317

## Beschreibung

Die Erfindung betrifft ein Strukturbauteil, ein Verfahren zum Herstellen eines Strukturbauteils und eine Verwendung eines Strukturbauteils für eine Flugzeugschale.

Leichtbaustrukturen, wie sie insbesondere auch im Bereich der Luft- und Raumfahrttechnik eingesetzt werden, bestehen häufig aus einer Außenhaut, die auf der Innenseite durch eine zweidimensionale Versteifung verstärkt ist. So ist beispielsweise ein Flugzeugrumpf, dessen Außenhaut mit Hilfe von Stringern und Spanten verstärkt ist, auf diese Weise aufgebaut. Bei der Auslegung solcher Leichtbaustrukturen wird ein besonderer Wert auf die Gewichtsreduzierung gelegt, wobei die Leichtbaustrukturen jedoch in Abhängigkeit vom jeweiligen Anwendungsfall unterschiedliche Festigkeits-, Ermüdungs- und Schadenstoleranzanforderungen erfüllen sollen. Insbesondere im Flugzeugbau bestehen besondere Vorgaben hinsichtlich der schadenstoleranten Eigenschaften der dort verwendeten Leichtbaustrukturen. Simultan sind Anforderungen an eine leichte und kostengünstige Bauweise zu berücksichtigen.

Bei der Auslegung von Leichtbaustrukturen sollen in Abhängigkeit von einer speziellen Anwendung unterschiedliche Festigkeitsanforderungen, Ermüdungsanforderungen und Schadenstoleranzanforderungen erfüllt sein. Insbesondere im Flugzeugbau wird ein besonderer Aspekt auf die Schadenstoleranz von Leichtbaustrukturen gelegt, da dies für die Sicherheit des Passagiertransports wichtig ist.

Herkömmlich werden Flugzeugrumpfe aus miteinander verbundenen Hautblechen gebildet, die mit Versteifungselementen vorgesehen sind. Es sind unterschiedliche Verfahren zum Verbinden von einzelnen Hautblechen sowie zum Verbinden von Blechen mit Versteifungselementen bekannt. Es werden Vernietungs-, Klebe- und Schweißverfahren für die Verbindung von einzelnen Hautblechen sowie zum Verbinden von Hautblechen mit Versteifungselementen eingesetzt.

Vorteile von Schweißverfahren gegenüber Vernieten und Kleben liegen in der Prozessautomatisierungsmöglichkeit, der höheren Qualität und einer Reproduzierbarkeit der erzielten Verbindungen. Im Flugzeugbau geschweißte Strukturbauteile sind korrosionsbeständig und leicht reparierbar. Sie besitzen sehr gute statische Eigenschaften und erlauben dadurch eine Gewichtsreduzierung. Außerdem sind die mittels Schweißens hergestellten Strukturen zumeist vergleichsweise kostengünstig herstellbar.

DE 196 39 667 und DE 198 44 035 offenbaren ein Strukturbauteil in geschweißter Haut-Stringer-Bauweise. Aus großformatigen Hautblechen werden mittels Laserschweißens Profile (Stringer oder Spanten) aufgeschweißt.

Derartige Strukturbauteile, die in einem Flugzeug verwendet werden können, müssen auch Anforderungen an eine geforderte Schadenstoleranz gerecht werden. Insbesondere im Bereich der Verbindungen zwischen der Haut und den Versteifungsprofilen sind Integralstrukturen (geschweißte oder ausgefräste) besonders empfindlich. Im Falle einer Rissbeschädigung des Hautfeldes verbreitert sich der Riss bei genieteten oder aufgeklebten Versteifungsprofilen üblicherweise unter dem Versteifungsprofil, ohne dieses zu beschädigen.

Bei einer Integralbauweise (insbesondere bei einer geschweißten oder ausgefrästen Versteifung) besteht die Gefahr der Ausbreitung eines Risses auch im Versteifungselement. Dieser Effekt verringert die Lebensdauer von Versteifungselementen und mindert schadenstolerante Eigenschaften von Integralstrukturen. Eine Erhöhung der Schadenstoleranz kann mittels Erhöhens der Hautdicke, mittels Verwendens von zusätzlichen lokalen Versteifungen oder mittels Anpassens der Hautdicke an Belastungsanforderungen erzielt werden. Diese Maßnahmen erhöhen jedoch das Gewicht und sind kostenintensiv.

DE 199 24 909 offenbart eine Aufdickung im Fußbereich der Versteifung bei einem integralen Strukturbauteil zur Rissverzögerung bzw. Rissablenkung. Da die Aufdickung aber integral ist, das heißt die Versteifung und die Aufdickung als gemeinsame Komponente gebildet sind, besteht auch hier die Gefahr einer fortschreitenden Rissausbildung über den gesamten Bereich der Versteifung hinweg.

Eine andere Methode zur Verbesserung der Schadenstoleranz ist die Verwendung von zusätzlichen Verstärkungen innerhalb-der Versteifungsprofile (siehe DE 101 63 848) oder an den Versteifungsprofilen (siehe DE 100 31 510) zum Vermeiden einer Rissausbreitung (ähnlich wie in Fig. 1). Bei der Ausbreitung des Risses im Versteifungselement ist eine Verzögerung des Rissfortschrittes aufgrund einer schnellen Initiierung des Risses innerhalb des Verstärkungselements minimal. Zudem werden Werkstoffe mit besseren mechanischen Eigenschaften für die Verstärkungselemente verwendet. Diese Werkstoffe weisen dafür eine geringere Beständigkeit gegen Rissausbreitung auf. Dadurch ist die Lebensdauer von Versteifungselementen nach der Rissinitiierung gering.

US 4,331,723 beschreibt eine Verbundwerkstoffstruktur mit Verbindungsstücken, welche mit adhärenten Einsätzen zwischen einer Außenhaut und einer Rippe ausgebildet sind. Die Einsätze sind keilförmig ausgebildet. Die Einsätze weisen in zwei Richtungen verstärkte laminierte Flächen um einen verstärkten Kern auf, wobei die laminierten Schichten in der Nähe des Kerns zusammengenäht sind. Eine Verzögerung einer Rissinszenierung in einem Verstärkungselement mittels eines Umhüllungselements, welches aus einem Material mit geringeren Festigkeitswerten besteht, wird nicht verwendet.

US 3,622,283 beschreibt eine korrosionsbeständige Kompositstruktur, welche eine Zinnmetallmatrix mit einer Vielzahl von Karbonfasern aufweist, die von einem Metallfilm mit einem höheren Schmelzpunkt als Zinn beschichtet sind. Durch den Einsatz von Kohlefasern wird die Reissfestigkeit und Elastizität dieser Verbundfaserstruktur im Vergleich zu Zinn erhöht. Ferner können durch die Kohlefaserumhüllungen Hohlräume zwischen Kohlefasern und Zinn vermieden werden. Das Umhüllungsmetall dient als Verbindungsmetall zwischen Zinn und den Kohlefasern.

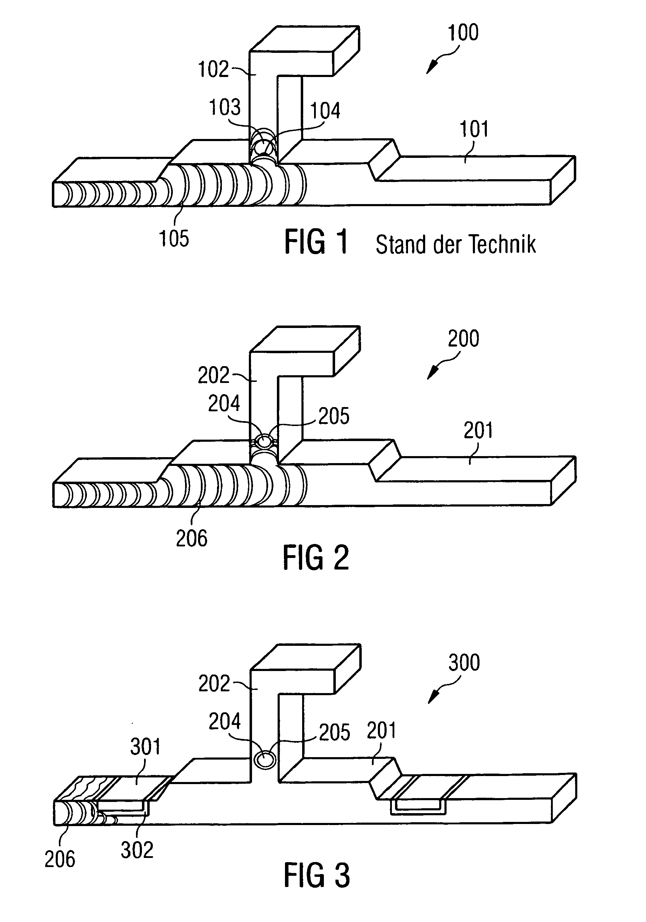

Im Weiteren wird bezugnehmend auf Fig. 1 ein Strukturbauteil 100 für ein Flugzeug als Stand der Technik beschrieben.

Das Strukturbauteil 100 enthält ein Hautblech 101 und ein Stringerelement 102 (als Versteifungselement), welche miteinander integral, das heißt einstoffig, vorgesehen sind. Um die Schadenstoleranz des Strukturbauteils 100 zu verbessern, ist in dem Stringer 102 ein Raum vorgesehen, in den ein Verstärkungselement 103 eingebracht ist. Das Verstärkungselement 103 hat die Aufgabe, beim Auftreten eines Risses die Ausbreitung des Risses zu vermeiden.

Allerdings kann bei einer Rissausbreitung 105 im Strukturbauteil 100 trotz des Vorsehens des Verstärkungselements 103 eine rasche Rissinitiierung 104 stattfinden. Die rasche Rissinitiierung 104 führt zu einem Bruch des Verstärkungselements 103. Somit ist die Rissverzögerungseffekt durch Verstärkungselement 103 minimal.

Es ist eine Aufgabe der Erfindung, ein Strukturbauteil bereitzustellen, bei dem die Ausbreitung von Rissen effektiv gehemmt ist.

Dieses Problem wird durch ein Strukturbauteil, durch ein Verfahren zum Herstellen eines Strukturbauteils und durch eine Verwendung eines Strukturbauteils für eine Flugzeughaut mit den Merkmalen gemäß den unabhängigen Patentansprüchen gelöst.

Das Strukturbauteil der Erfindung ist in Anspruch 1 definiert.

Darüber hinaus ist erfindungsgemäß in Anspruch 20 ein Verfahren zum Herstellen eines Strukturbauteils definiert.

Ferner offenbart die Erfindung in Anspruch 21 die Verwendung eines Strukturbauteils mit den oben beschriebenen Merkmalen für eine Flugzeugschale.

Ein wichtiger Vorteil der Erfindung ist darin zu sehen, dass durch das Umhüllen eines Verstärkungselements mit einem Umhüllungselement aus einen Material mit einem geringeren Festigkeitswert als der des Verstärkungselements, insbesondere bei einem Strukturbauteil für eine Flugzeughaut, eine Ausbreitung eines bei starker mechanischer Belastung oder Materialermüdung auftretenden Risses sehr effizient gehemmt werden kann. Anders ausgedrückt kann eine Erhöhung der Schadenstoleranz eines Strukturbauteils durch die Implementierung einer zusätzlichen Zwischenschicht/Zwischenstruktur bzw. einer Umhüllungsstruktur zwischen einem Trägerelement (zum Beispiel ein Versteifungselement oder eine Flächenstruktur) einerseits und einem Verstärkungselement (die zum Verstärken des Trägerelements dient) andererseits erreicht werden.

Somit schafft die Erfindung ein Strukturbauteil mit verbesserten schadenstoleranten Eigenschaften. Die Erfindung kann insbesondere zum Verbessern der Schadenstoleranz von geschweißten Rumpfschalen eines Flugzeugs eingesetzt werden. Die Erfindung schafft somit insbesondere ein Strukturbauteil mit einem oder mehreren Versteifungsprofilen, insbesondere für die Anwendung im Flugzeugbau, mit einer verbesserten Schadenstoleranz.

Ein Aspekt der Erfindung ist darin zu sehen, dass innerhalb eines Strukturbauteils nicht nur (zum Beispiel zylindrische oder kugelförmige) Verstärkungselemente angeordnet sind, die bereits für sich eine verzögernde Wirkung auf den Rissfortschritt aufweisen, sondern dass zusätzlich zwischen einem solchen Verstärkungselement und einer zu verstärkenden Trägerstruktur eine (zum Beispiel elastische oder weiche) Zwischenschicht aus einem anderen Werkstoff angeordnet ist, die eine Rissinitiierung in dem Verstärkungselement vermeidet oder zumindest verzögert.

Das Umhüllungselement bzw. die Zwischenschicht unterbindet einen direkten Kontakt zwischen dem Trägerelement (zum Beispiel eine Versteifung) und dem Verstärkungselement. Indem ein direkter Kontakt zwischen dem Verstärkungselement und der Versteifung mittels Vorsehens des Umhüllungselements vermieden ist, ist die Korrosionsbeständigkeit des Strukturbauteils verbessert.

Die Zwischenschicht kann aus einem Werkstoff gebildet sein, der von den Werkstoffen der Versteifungselemente und der Verstärkungselemente unterschiedlich ist und (als Matrix) über geringere Festigkeitswerte verfügen kann als Werkstoffe, aus denen Trägerelement und Verstärkungselement gebildet sind.

Die Zwischenschicht kann Fasern enthalten, zum Beispiel organische Fasern, Mineralfasern (zum Beispiel Basalt), Glasfasern, etc. Auch kann die Zwischenschicht gewebte Stoffe enthalten. Dieser Fasern können unidirektional (bevorzugt in Längsrichtung des Versteifungselements ausgerichtet) sowie in geflochtener Form vorgesehen werden. Die Zwischenschicht minimiert bzw. vermeidet die Rissinitiierung im Verstärkungselement, wodurch die Eigenschaften hinsichtlich Schadenstoleranz des gesamten Strukturbauteils verbessert werden.

Als Matrixmaterial für die Zwischenschicht eignet sich eine Reihe von Werkstoffen. Bevorzugt ist eine Kombination von Epoxydharz und Glasfasern. Es können jedoch auch andere Harzsysteme sowie weiche Metalllegierungen verwendet werden.

Das Verstärkungselement mit der zusätzlichen Zwischenschicht oder Pufferschicht kann zum Beispiel in einem Stringer oder einem Spant, das heißt, in einem Versteifungselement, oder in dem Hautblech eines Flugzeugs verwendet werden, wodurch die schadenstoleranten Eigenschaften signifikant verbessert werden.

Die Erfindung hat den Vorteil, dass verbesserte schadenstolerante Eigenschaften von Integralstrukturen eines Flugzeugrumpfes oder eines Flügels erreicht werden können. Insbesondere für geschweißte Flugzeugschalen ist eine solche hohe Schadenstoleranz von großer Bedeutung.

Experimente mit dem erfindungsgemäßen Konzept haben gezeigt, dass bei der Rissausbreitung im Verstärkungsbereich eine Rissinitiierung im Verstärkungselement effizient gehemmt ist. Dadurch wird ein schnelles Versagen des Verstärkungselementes sicher vermieden. Eine zusätzliche (zum Beispiel faserverstärkte) Schicht zwischen den einzelnen Komponenten des Strukturbauteils kann die Rissausbreitung in den einzelnen Komponenten des Strukturbauteils lokal begrenzen. Folglich bleibt das durch die zusätzliche Schicht abgrenzte Teil intakt, und der Risswachstum wird gebremst. Ein ähnlicher Effekt wird auch beim Verstärken von Stringern verwendet und beobachtet.

Geschweißte Schalenteile können zum Beispiel in unteren Bereichen eines Flugzeugrumpfes eingesetzt werden. Eine Erhöhung der schadenstoleranten Eigenschaften ("Two-Bay Crack"-Kriterium und Restfestigkeit) kann die Anwendung der Erfindung auch als Seitenschale oder als Oberschale eines Flugzeugrumpfes ermöglichen.

Die Erfindung kann insbesondere vorteilhaft bei geschweißten Schalenelementen (zum Beispiel ein Hautelement, an dem Stringerelemente festgeschweißt sind) eingesetzt werden. Zudem sind auch statische Eigenschaften von geschweißten Schalen häufig besser als von genieteten oder geklebten Schalen. Die Herstellungskosten für geschweißte Schalen sind deutlich niedriger als für geklebte oder genietete Schalen. Deshalb erlaubt eine erfindungsgemäße Erweiterung des Anwendungsbereiches von geschweißten Schalen eine signifikante Reduzierung der Herstellungskosten bei simultaner Erfüllung aller anderen Anforderungen für den Flugzeugbau (zum Beispiel in sicherheitsrelevanter Hinsicht).

Ein Aspekt der Erfindung ist darin zu sehen, dass ein metallisches Strukturbauteil für ein Flugzeug bereitgestellt ist, bestehend aus mindestens einem Hautblech sowie aus einem oder mehreren an dem Hautblech angebrachten Versteifungsprofilen. An einzelnen Komponenten des Strukturbauteils können Verstärkungen angeordnet sein, und zwischen den Verstärkungselementen und Komponenten des Strukturbauteils kann mindestens eine Zwischenschicht angeordnet sein, die aus einem anderen Werkstoff oder einer anderen Werkstoffkombination besteht als Hautblech, Versteifungsprofil und Verstärkungselement und die einen direkten Kontakt zwischen den Verstärkungselementen und Komponenten des Strukturbauteils ausschließt.

Bevorzugte Weiterbildungen der Erfindung ergeben sich aus den abhängigen Ansprüchen.

Im Weiteren werden Ausgestaltungen des erfindungsgemäßen Strukturbauteils beschrieben. Diese Ausgestaltungen gelten auch für das erfindungsgemäße Verfahren und für die erfindungsgemäße Verwendung.

Das Trägerelement des Strukturbauteils kann ein Hautblech für ein Flugzeug sein. Gemäß dieser Ausgestaltung kann mittels Einbringens eines mit einen Umhüllungselement umhüllten Verstärkungselementes in ein Hautblech die mechanische Stabilität des Strukturbauteils signifikant verbessert werden und die Anfälligkeit gegenüber Rissausbreitung herabgesetzt werden.

Das Trägerelement kann auch ein Stringerelement oder ein Spantelement für ein Flugzeug sein, das heißt eine Versteifungsstruktur, die an dem Trägerelement befestigt ist und eine erhöhte mechanische Festigkeit sowie eine verringerte Anfälligkeit gegenüber Rissen zeigt.

Das Trägerelement kann auch ein Hautblech mit einem daran angebrachten Stringerelement und/oder Spantelement sein. Es kann an einer oder an mehreren Stellen eines solchen Strukturbauteils, zum Beispiel in einem Hautblech einerseits und in einem Stringerelement bzw. einem Spantelement andererseits jeweils ein Verstärkungselement mit einem dieses umgebenden Umhüllungselement vorgesehen sein. Dadurch kann an verschiedenen Stellen eines solchen Strukturbauteils die mechanische Stabilität verbessert werden und eine Ausbreitung von Rissen effektiv gehemmt werden.

Das Hautblech kann integral mit dem daran angebrachten Stringerelement und/oder Spantelement vorgesehen sein. Bei einer solchen Integralbauweise kann die Rissanfälligkeit durch das Einbringen eines Verstärkungselements mit umgebender Umhüllung stark herabgesetzt werden.

Das Trägerelement kann ein Hautblech mit einem daran angeschraubten, angenieteten, angeklebten oder auf eine beliebige andere Weise angebrachten Stringerelement und/oder Spantelement sein. Alternativ zu der integralen Lösung kann das Stringerelement und/oder das Spantelement somit an dem Trägerelement reversibel oder irreversibel befestigt werden. Auch in diesem Fall kann das Vorsehen eines Verstärkungselements mit darum herum angeordneten Umhüllungselement die mechanische Stabilität deutlich verbessern.

Das Umhüllungselement hat vorzugsweise eine Dicke von mindestens 0.05 mm. Das ist ein Mindestwert, um die Rissinitiierung in einem Versteifungselement besonders effektiv zu stoppen und als Folge den Risswachstum signifikant herabzusetzen.

Das Trägerelement und/oder das Verstärkungselement kann aus einem metallischen Material hergestellt sein. Somit kann das Strukturbauteil als metallisches Strukturbauteil, zum Beispiel für die Haut eines Flugzeugs verwendet werden.

Das Verstärkungselement und das Umhüllungselement können aus unterschiedlichen Materialien hergestellt sein. Dadurch ist eine voneinander unabhängige Optimierung der jeweiligen Teilaufgaben von Verstärkungselement und Umhüllungselement möglich, da die unterschiedlichen Materialien auf die entsprechenden Aufgaben bezogen selektiv ausgewählt werden können.

Das Umhüllungselement kann aus einem Kunststoffmaterial hergestellt sein. Das Umhüllungselement kann auch aus einem organischen Material hergestellt sein. Das Umhüllungselement kann alternativ eine Metalllegierung aufweisen oder daraus bestehen.

Ferner kann das Umhüllungselement - vollständig oder teilweise - Fasern aufweisen. Solche Fasern sind für ein Unterdrücken eines Risswachstums besonders vorteilhaft. Die Fasern können eine Länge von mindestens 20 mm aufweisen.

Die Fasern können unidirektional verlaufend vorgesehen sein, zum Beispiel in Richtung des Verstärkungselements bzw. in Richtung eines Versteifungselements ausgerichtet sein. Durch eine solche Orientierung kann das Umgebungselement seine Aufgaben, insbesondere das Abpuffern des Ausbreitens von Rissen, besonders effektiv erfüllen.

Fernern können die Fasern geflochten ausgebildet sein. Das von dem Umhüllungselement zumindest teilweise umgebene Verstärkungselement kann an den Trägerelementen mittels Schweißens, Vernietens oder Verklebens befestigt sein. Dies ermöglicht eine besonders zuverlässige und sichere Befestigung der unterschiedlichen Komponenten des Strukturbauteils, welches demzufolge gute mechanische Eigenschaften aufweist.

Das Strukturbauteil kann als Strangpressprofil ausgebildet sein, wodurch eine Gewichtsreduzierung erreichbar ist und ein geringer Preis erreicht werden kann.

Das Strukturbauteil kann auch mittels Fräsens aus einem Vollkörper hergestellt sein.

Die Verstärkungselemente können aus anderen Werkstoffen oder Werkstoffverbunden bestehen als andere Komponenten des Strukturbauteils.

Ausführungsbeispiele der Erfindung sind in den Figuren dargestellt und werden im Weiteren näher erläutert.

Es zeigen:
Fig. 1 ein Strukturbauteil gemäß dem Entwicklungstand der Technik,
Fig. 2 ein Strukturbauteil gemäß einem ersten Ausführungsbeispiel der Erfindung,
Fig. 3 ein Strukturbauteil gemäß einem zweiten Ausführungsbeispiel der Erfindung,
Fig. 4 ein Strukturbauteil gemäß einem dritten Ausführungsbeispiel der Erfindung,
Fig. 5 ein Strukturbauteil gemäß einem vierten Ausführungsbeispiel der Erfindung,
Fig. 6 ein Strukturbauteil gemäß einem fünften Ausführungsbeispiel der Erfindung,
Fig. 7 ein Strukturbauteil gemäß einem sechsten Ausführungsbeispiel der Erfindung,
Fig. 8 ein Strukturbauteil gemäß einem siebten Ausführungsbeispiel der Erfindung,
Fig. 9 ein Strukturbauteil gemäß einem achten Ausführungsbeispiel der Erfindung.

Gleiche oder ähnliche Komponenten in unterschiedlichen Figuren sind mit gleichen Bezugsziffern versehen.

Die Darstellungen in den Figuren sind schematisch und sind nicht maßstäblich.

Im Weiteren wird bezugnehmend auf **Fig. 2** ein Strukturbauteil 200 gemäß einem ersten Ausführungsbeispiel der Erfindung beschrieben.

Das Strukturbauteil 200 enthält ein Hautblech 201, ein integral mit dem Hautblech 201 vorgesehenes Stringerelement 202 (als Versteifungselement zum Versteifen des Hautblechs 201) und ein Verstärkungselement 204 mit einem dieses umgebenden Umhüllungselement 205. Das Verstärkungselement 204 ist von dem Umhüllungselement 205 umhüllt und in das Stringerelement 202 eingebettet. Das Hautblech 201 ist integral mit dem daran angebrachten Stringer 202 vorgesehen. Das Hautblech 201 und das Stringerelement 202 sind jeweils aus Aluminiummaterial hergestellt. Das Verstärkungselement 204 ist ebenfalls aus einem metallischen Material hergestellt. Das Umhüllungselement 205 ist aus einer Mischung von Epoxydharz und Glasfasern hergestellt.

Im Falle der Entstehung eines Risses in dem Strukturbauteil 200 kann sich dieser Riss allenfalls in einem Teil des Hautblechs 201 ausbreiten, wobei das mit der Zwischenschicht 205 umgebene Verstärkungselement 204 eine weitere Ausbreitung des Risses hemmt und somit das Versteifungselement 202 vor einem Anriss schützt (siehe Fig. 2).

Im Weiteren wird bezugnehmend auf **Fig. 3** ein Strukturbauteil 300 gemäß einem zweiten Ausführungsbeispiel der Erfindung beschrieben.

Zusätzlich zu dem Vorsehen des von dem Umhüllungselement 205 umgebenen Verstärkungselements 204 in dem Stringerelement 202 ist bei dem Strukturbauteil 300 ein zusätzliches Verstärkungselement 301 in dem Hautblech 201 integriert. Das zusätzliche Verstärkungselement 301 ist von einem zusätzlichen Umhüllungselement 302 umgeben, wobei das Verstärkungselement 301 hinsichtlich des Materials ähnlich ausgebildet ist wie das Verstärkungselement 304, und das Umhüllungselement 302 kann aus demselben Material vorgesehen sein wie das Umhüllungselement 205.

Mittels Vorsehens des mit dem Umhüllungselement 302 umgebenen Verstärkungselements 301 auch in dem Hautblech 201 kann eine Rissausbreitung 206 noch effizienter vermieden werden, wodurch die Schadenstoleranz des Strukturbauteils 300 zusätzlich erhöht ist.

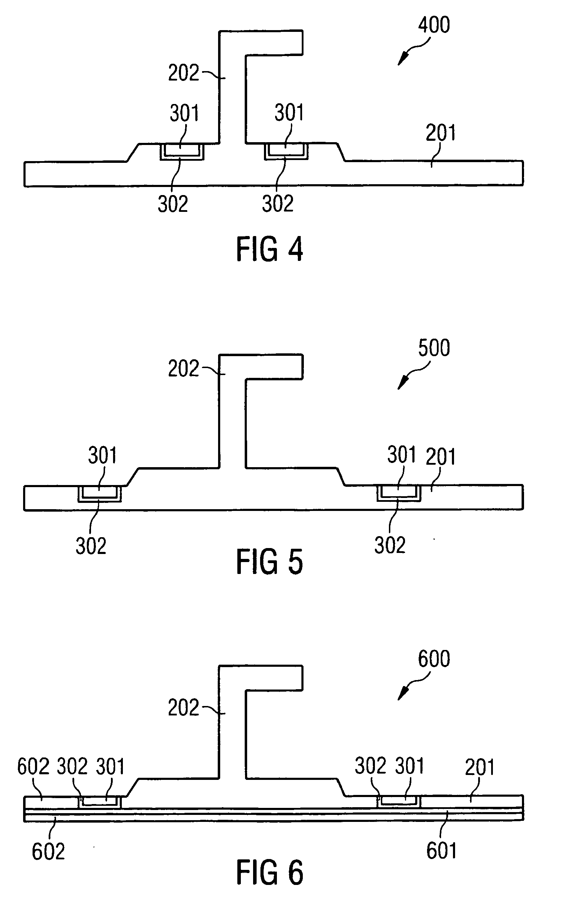

**Fig. 4** zeigt ein Strukturbauteil 400 gemäß einem dritten Ausführungsbeispiel der Erfindung. Das Strukturbauteil 400 ähnelt dem Strukturbauteil 300, enthält jedoch kein von einem Umhüllungselement 205 umgebenes Verstärkungselement 204 in dem Stringerelement 202.

**Fig. 5** zeigt ein Strukturbauteil 500 gemäß einem vierten Ausführungsbeispiel der Erfindung. Das Strukturbauteil 500 ähnelt dem Strukturbauteil 400, jedoch sind die von einem Umhüllungselement 302 umgebenen Verstärkungselemente 301 seitlich weiter nach außen versetzt.

**Fig. 6** zeigt ein Strukturbauteil 600 gemäß einem fünften Ausführungsbeispiel der Erfindung. Das Strukturbauteil 600 ähnelt dem Strukturbauteil 500, jedoch ist hierbei eine Klebeschicht 601 vorgesehen, die zwischen zwei Metall-Laminaten 602 eingebettet ist, um das Hautblech 201 zu bilden.

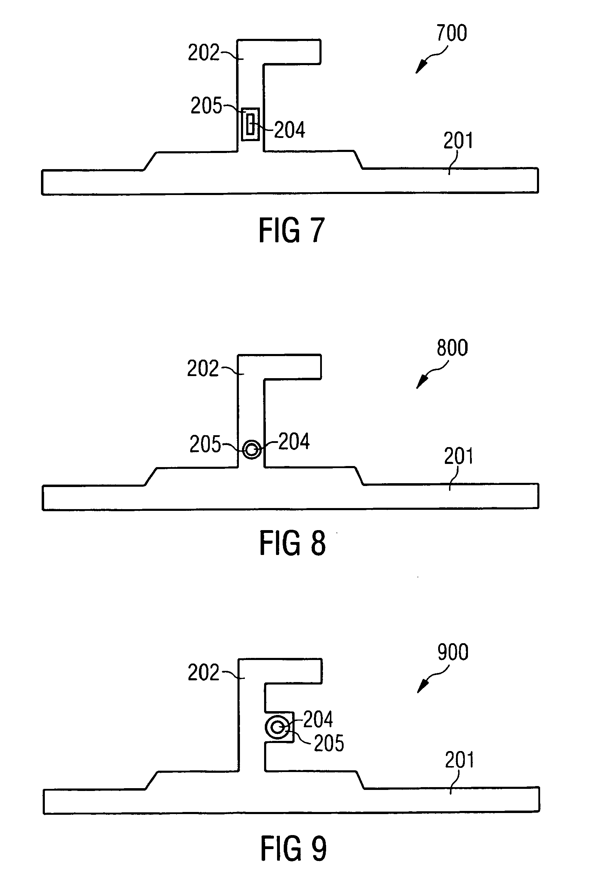

Fig.4 bis Fig.6 zeigen Ausführungsbeispiele, in denen von einem Umhüllungselement umgebene Verstärkungselemente im Hautfeld integriert sind. Dagegen zeigen Fig.7 bis Fig.9 Ausführungsbeispiele, in denen von einem Umhüllungselement umgebene Verstärkungselemente in einer Versteifung integriert sind.

**Fig. 7** zeigt ein Strukturbauteil 700 gemäß einem sechsten Ausführungsbeispiel der Erfindung. Das Strukturbauteil 700 ähnelt dem Strukturbauteil 200, jedoch ist hierbei das von einem Umhüllungselement 205 umgebene Verstärkungselement 204 im Querschnitt rechteckförmig statt kreisförmig.

**Fig. 8** zeigt ein Strukturbauteil 800 gemäß einem siebten Ausführungsbeispiel der Erfindung. Das Strukturbauteil 800 ähnelt dem Strukturbauteil 200.

**Fig. 9** zeigt ein Strukturbauteil 900 gemäß einem achten Ausführungsbeispiel der Erfindung. Das Strukturbauteil 900 ähnelt dem Strukturbauteil 200, jedoch ist hierbei das von einem Umhüllungselement 205 umgebene Verstärkungselemente 204 in einem seitlichen Fortsatz des Versteifungselements 202 angeordnet.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste:

- 100: Strukturbauteil
- 101: Hautblech
- 102: Stringer
- 103: Verstärkungselement
- 104: Rissinitiierung
- 105: Rissausbreitung
- 200: Strukturbauteil
- 201: Hautblech
- 202: Stringer
- 204: Verstärkungselement
- 205: Umhüllungselement
- 206: Rissausbreitung
- 300: Strukturbauteil
- 301: Verstärkungselement
- 302: Umhüllungselement
- 400: Strukturbauteil
- 500: Strukturbauteil
- 600: Strukturbauteil
- 601: Klebeschicht
- 602: Metall-Laminaten
- 700: Strukturbauteil
- 800: Strukturbauteil
- 900: Strukturbauteil

## Patentansprüche

1. Strukturbauteil (200), aufweisend
ein aus mindestens einem Hautblech (201) und/oder aus mindestens einem an dem/einem Hautblech (201) angebrachten Versteifungselement (202) bestehendes Trägerelement (202);
ein Verstärkungselement (204);
ein Umhüllungselement (205);
wobei das Verstärkungselement (204), das von dem Umhüllungselement (205) zumindest teilweise umhüllt ist, in das Trägerelement (202) eingebettet ist,
wobei das Verstärkungselement (204) einerseits und das Umhüllungselement (205) andererseits aus unterschiedlichen Materialien hergestellt sind;
wobei das Umhüllungselement (205) ein Material mit geringeren Festigkeitswerten als das Material des Verstärkungselements (204) aufweist und eine Rissinitiierung in dem Verstärkungselement (204) effizient hemmt.

2. Strukturbauteil (200) nach Anspruch 1,
bei dem das Trägerelement ein Hautblech (201) für ein Flugzeug ist.

3. Strukturbauteil (200) nach Anspruch 1,
bei dem das Trägerelement ein Stringerelement (202) oder ein Spantelement für ein Flugzeug ist.

4. Strukturbauteil (200) nach Anspruch 1,
bei dem das Trägerelement ein Hautblech (201) mit einem daran angebrachten Stringerelement (202) und/oder Spantelement ist.

5. Strukturbauteil (200) nach Anspruch 4,
bei dem das Hautblech (201) integral mit dem daran angebrachten Stringerelement (202) und/oder Spantelement vorgesehen ist.

6. Strukturbauteil (200) nach Anspruch 4,
bei dem das Trägerelement ein Hautblech (201) mit einem daran angeschraubten, angenieteten oder angeklebten Stringerelement (202) und/oder Spantelement ist.

7. Strukturbauteil (200) nach einem der Ansprüche 1 bis 6,
bei dem das Umhüllungselement (205) eine Dicke von mindestens 0.05 mm hat.

8. Strukturbauteil (200) nach einem der Ansprüche 1 bis 7,
bei dem das Trägerelement (202) und/oder das Verstärkungselement (204) aus einem metallischen Material hergestellt ist oder sind.

9. Strukturbauteil (200) nach einem der Ansprüche 1 bis 8,
bei dem das Verstärkungselement (204) einerseits und das Trägerelement (202) andererseits aus unterschiedlichen Materialien hergestellt sind.

10. Strukturbauteil (200) nach einem der Ansprüche 1 bis 9,
bei dem das Umhüllungselement (205) aus einem Kunststoffmaterial hergestellt ist.

11. Strukturbauteil (200) nach einem der Ansprüche 1 bis 10,
bei dem das Umhüllungselement (205) aus einem organischen Material hergestellt ist.

12. Strukturbauteil (200) nach einem der Ansprüche 1 bis 9,
bei dem das Umhüllungselement (205) aus einer Metalllegierung hergestellt ist.

13. Strukturbauteil (200) nach einem der Ansprüche 1 bis 12,
bei dem das Umhüllungselement (205) Fasern aufweist.

14. Strukturbauteil (200) nach Anspruch 13,
bei dem die Fasern eine Länge von mindestens 20 mm aufweisen.

15. Strukturbauteil (200) nach Anspruch 13 oder 14,
bei dem die Fasern unidirektional ausgerichtet sind.

16. Strukturbauteil (200) nach Anspruch 13 oder 14,
bei dem die Fasern geflochten ausgebildet sind.

17. Strukturbauteil (200) nach einem der Ansprüche 1 bis 16,
bei dem das von dem Umhüllungselement (205) zumindest teilweise umgebene Verstärkungselement (204) an dem Trägerelement (202) mittels Schweißens, Vernietens oder Verklebens befestigt ist.

18. Strukturbauteil (200) nach einem der Ansprüche 1 bis 17,
ausgebildet als Strangpressprofil.

19. Strukturbauteil (200) nach einem der Ansprüche 1 bis 18,
das aus einem Vollkörper ausgefräst ist.

20. Verfahren zum Herstellen eines Strukturbauteils (200), wobei das Verfahren aufweist:
zumindest teilweises Umhüllen eines Verstärkungselements (204) mit einem Umhüllungselement (205)
Einbetten des Verstärkungselements (204) mit dem Umhüllungselement (205) in ein Trägerelement (202);
wobei das Verstärkungselement (204) einerseits und das Umhüllungselement (205) andererseits aus unterschiedlichen Materialien hergestellt werden;
wobei das Umhüllungselement (205) ein Material mit geringeren Festigkeitswerten als das Material des Verstärkungselements (204) aufweist und eine Rissinitiierung in dem Verstärkungselement (204) effizient hemmt.
wobei das Trägerelement aus mindestens einem Hautblech (201) und/oder aus mindestens einem an dem Hautblech (201) angebrachten Versteifungselement (202) besteht.

21. Verwendung eines Strukturbauteils (200) nach einem der Ansprüche 1 bis 19 für eine Flugzeugschale.

## Claims

1. Structural element (200), comprising
a carrier element (202) consisting of at least one skin panel (201) and/or at least one stiffening element (202) attached to the/a skin panel (201);
a reinforcing element (204);
a sheathing element (205);
wherein the reinforcing element (204), which is at least partially enveloped by the sheathing element (205), is embedded in the carrier element (202),
wherein in the reinforcing element (204) on the one hand and the sheathing element (205) on the other hand are made out of different materials;
wherein the sheathing element (205) comprises a material with lower strength values than the material of the reinforcing element (204) and efficiently reduces a crack initiation in the reinforcing element (204).

2. Structural element (200) according to claim 1,
wherein the carrier element is a skin panel (201) for an aircraft.

3. Structural element (200) according to claim 1,
wherein the carrier element is a stringer element (202) or a frame element for an aircraft.

4. Structural element (200) according to claim 1,
wherein the carrier element is a skin panel (201) with a stringer element (202) and/or frame element attached thereto.

5. The structural element (200) according to claim 4,
wherein the skin panel (201) is integrally provided with the stringer element (202) and/or frame element attached thereto.

6. The structural element (200) according to claim 4,
wherein the carrier element is a skin panel (201) with a stringer element (202) and/or a frame element screwed, riveted or adhesively bonded thereto.

7. The structural element (200) according to any one of the claims 1 to 6,
wherein the sheathing element (205) has a thickness of at least 0.05 mm.

8. The structural element (200) according to any one of the claims 1 to 7,
wherein the carrier element (202) and/or the reinforcing element (204) is or are made of a metal material.

9. The structural element (200) according to any one of the claims 1 to 8,
wherein the reinforcing element (204) on the one hand and the carrier element (202) on the other hand are made out of different materials;

10. The structural element (200) according to any one of the claims 1 to 9,
wherein the sheathing element (205) is made of a plastic material.

11. The structural element (200) according to any one of the claims 1 to 10,
wherein the sheathing element (205) is made of an organic material.

12. The structural element (200) according to any one of the claims 1 to 9,
wherein the sheathing element is made of a metal alloy.

13. The structural element (200) according to any one of the claims 1 to 12,
wherein the sheathing element (205) comprises fibers.

14. The structural element (200) according to claim 13,
wherein the fibers have a length of at least 20 mm.

15. The structural element (200) according to claim 13 or 14,
wherein the fibers are unidirectionally aligned.

16. The structural element (200) according to claim 13 or 14,
wherein the fibers are braided.

17. The structural element (200) according to any one of the claims 1 to 16,
wherein the reinforcing element (204), which is at least partially enveloped by the sheathing element (205), is attached to the carrier element (202) by welding, riveting or adhesive bonding.

18. The structural element (200) according to any one of the claims 1 to 17, designed as an extruded profile.

19. The structural element (200) according to any one of the claims 1 to 18, which is milled from a solid body.

20. The method for manufacturing a structural element (200), wherein the method comprises:
at least partially enveloping a reinforcing element (204) with a sheathing element (205);
embedding the reinforcing element (204) with the sheathing element (205) into a carrier element (202);
wherein the reinforcing element (204) on the one hand and the sheathing element (205) on the other hand are made of different materials;
wherein the sheathing element (205) comprises a material with lower strength values than the material of the reinforcing element (204) and efficiently reduces a crack initiation in the reinforcing element (204);
wherein the carrier element consists of at least one skin panel (201) and/or at least one stiffening element (202) attached to the skin panel (201).

21. Use of a structural element (200) according to any one of the claims 1 to 19 for an aircraft hull.

## Revendications

1. Composant structurel (200) comprenant
une lisse (202), constituée d'au moins une tôle de revêtement (201) et/ou d'au moins un élément raidisseur (204) monté sur la/une tôle de revêtement (201) ;
un élément de renforcement (204) ;
un élément de gainage (205) ;
l'élément de renforcement (204), enveloppé au moins en partie par l'élément de gainage (205), étant encastré dans la lisse (202),
l'élément de renforcement (204) d'un côté, et l'élément de gainage (205) de l'autre côté, étant fabriqués en matériaux différents,
l'élément de gainage (205) présentant un matériau de module de rigidité plus faible que le matériau de l'élément de renforcement (204) et freinant efficacement une amorce de fissure dans l'élément de renforcement (204).

2. Composant structurel (200) suivant la revendication 1, dans lequel la lisse est une tôle de revêtement (201) pour un avion.

3. Composant structurel (200) suivant la revendication 1, dans lequel la lisse est un élément raidisseur (202) ou un élément de couple pour un avion.

4. Composant structurel (200) suivant la revendication 1, dans lequel la lisse est une tôle de revêtement (201) avec un élément raidisseur (202) et/ou un élément de couple montés sur cette dernière.

5. Composant structurel (200) suivant la revendication 4, dans lequel la tôle de revêtement (201) est prévue intégralement avec l'élément raidisseur (202) et/ou l'élément de couple montés sur cette dernière.

6. Composant structurel (200) suivant la revendication 4, dans lequel la lisse est une tôle de revêtement (201) avec un élément raidisseur (202) et/ou élément de couple vissé, riveté ou collé sur cette dernière.

7. Composant structurel (200) suivant l'une des revendications 1 à 6, dans lequel l'élément de gainage (205) a une épaisseur d'au moins 0,05 mm.

8. Composant structurel (200) suivant l'une des revendications 1 à 7, dans lequel la lisse (202) et/ou l'élément de renforcement (204) est ou sont fabriqués en un matériau métallique.

9. Composant structurel (200) suivant l'une des revendications 1 à 8, dans lequel l'élément de renforcement (204) d'un côté, et la lisse (202) de l'autre côté, sont fabriqués en matériaux différents.

10. Composant structurel (200) suivant l'une des revendications 1 à 9, dans lequel l'élément de gainage (205) est fabriqué en une matière plastique.

11. Composant structurel (200) suivant l'une des revendications 1 à 10, dans lequel l'élément de gainage (205) est fabriqué en un matériau organique.

12. Composant structurel (200) suivant l'une des revendications 1 à 9, dans lequel l'élément de gainage (205) est fabriqué en un alliage métallique.

13. Composant structurel (200) suivant l'une des revendications 1 à 12, dans lequel l'élément de gainage (205) présente des fibres.

14. Composant structurel (200) suivant la revendication 13, dans lequel les fibres ont une longueur d'au moins 20 mm.

15. Composant structurel (200) suivant l'une des revendications 13 et 14, dans lequel les fibres ont une orientation unidirectionnelle.

16. Composant structurel (200) suivant l'une des revendications 13 et 14, dans lequel les fibres ont une structure floconnée.

17. Composant structurel (200) suivant l'une des reven-dications 1 à 16, dans lequel l'élément de renforcement (204), enveloppé au moins en partie par l'élément de gainage (205), est fixé sur la lisse (202) par soudage, rivetage ou collage.

18. Composant structurel (200) suivant l'une des reven-dications 1 à 17, réalisé sous forme de profilé extrudé.

19. Composant structurel (200) suivant l'une des reven-dications 1 à 18, fraisé à partir d'un corps plein.

20. Procédé de fabrication d'un composant structurel (200), comprenant :
un gainage au moins partiel d'un élément de renforcement (204) par un élément de gainage (205),
l'encastrement de l'élément de renforcement (204) avec l'élément de gainage (205) dans une lisse (202) ;
l'élément de renforcement (204), d'un côté, et l'élément de gainage (205), de l'autre côté, étant fabriqués en matériaux différents ;
l'élément de gainage (205) présentant un matériau de module de rigidité plus faibles que le matériau de l'élément de renforcement (204) et freinant efficacement une amorce de fissure dans l'élément de renforcement (204) ;
la lisse étant constituée d'au moins une tôle de revêtement (201) et/ou d'au moins un élément raidisseur (202) monté sur la tôle de revêtement (201).

21. Utilisation d'un composant structural (200) suivant l'une des revendications 1 à 19 pour une coque d'avion.
